# EUROPÄISCHE PATENTSCHRIFT

(11) **EP 1 329 277 B1**
(45) Veröffentlichungstag und Bekanntmachung des Hinweises auf die Patenterteilung: **30.03.2005**
(21) Anmeldenummer: 03000947.6
(22) Anmeldetag: 16.01.2003
(51) Int. Cl.: B23K 7/10, B23K 10/00

(54) **Verfahren für die automatische Erkennung von unterschiedlichen Schneiddüsen**
Method for automatic detection of different burners for cutting
Procédé de détection automatique de chalumeau de coupage

(30) Priorität: 22.01.2002 DE 10202424
(43) Veröffentlichungstag der Anmeldung: 23.07.2003
(73) Patentinhaber: Messer Cutting & Welding GmbH, 64823 Gross-Umstadt (DE)
(72) Erfinder: Faust, Josef, 64711 Erbach (DE)
(74) Vertreter: Staudt, Armin, Dipl.-Ing.

(56) Entgegenhaltungen:
- EP-A- 0 508 482
- DE-A- 3 344 933
- FR-A- 2 684 435
- US-A- 6 103 994

## Beschreibung

Die vorliegende Erfindung betrifft ein Verfahren für die automatische Erkennung von unterschiedlichen Schneiddüsen, die jeweils zum Schneiden von Materialien unterschiedlicher Materialstärken oder Materialarten geeignet sind, in einem im Schneidbrenner eingebauten Zustand.

Zum Schneiden von Materialien unterschiedlicher Materialstärken oder Materialarten mit Schneidbrennern müssen unterschiedliche Düsengrößen eingesetzt werden. Die Düsengröße ist bei solchen Düsen durch einen Stempel auf der Außenseite der Düse angegeben. Da solche Düsen im eingebauten Zustand in eine sogenannte Düsenkappe eingesetzt sind, ist im eingebauten Zustand die Beschriftung nicht erkennbar, so dass auch nicht unmittelbar die Größe der eingebauten Düse zu erkennen ist. Um daher sicherzustellen, dass die für den jeweiligen Schneidvorgang richtige Schneiddüsengröße in dem Schneidbrenner eingebaut ist, muß die Düse ausgebaut werden, was mit dem entsprechenden Zeitaufwand verbunden ist. Falls Material mit einer bestimmten Materialstärke oder Materialart nicht mit der geeigneten Düsengröße bearbeitet wird, kann sich Materialausschuss ergeben.

Zum Stand der Technik ist die EP 0 508 482 A2 zu nennen, in welcher ein Verfahren, um unterschiedliche Schweiß- und Schneidbrenner automatisch zu erkennen, dargestellt ist, bei dem den Brennern unterschiedliche elektrische Widerstände zuordnet werden, die die Steuerung nach Anschluss des Brenners erkennen kann. Weiterhin ist aus der DE 33 44 933 A1 bekannt, beim Brennschneidverfahren den Druck des Schneidgases zu beobachten, woraus Informationen über den Schneidvorgang gewonnen werden.

Der vorliegenden Erfindung liegt nun die Aufgabe zugrunde, ein Verfahren anzugeben, mit dem es möglich ist, die Größe einer im Schneidbrenner eingebauten Schneiddüse zu ermitteln, ohne dass dazu die Schneiddüse ausgebaut werden muss.

Diese Aufgabe wird, ausgehend von dem eingangs angegebenen Verfahren, zum einen dadurch gelöst, dass der jeweiligen Schneiddüse ein Gas unter definiertem Druck von einer Druckquelle zugeführt wird, die Gaszufuhr dann unterbrochen wird, der zeitliche Druckabfall erfasst und mit für Schneiddüsen-Typen spezifischen Druckabfall-Kenndaten verglichen wird, um bei Übereinstimmung mit den Kenndaten die in den Schneidbrenner eingebaute Schneiddüse einem erkannten Schneiddüsen-Typ zuzuordnen. Zum anderen wird die Aufgabe auch dadurch gelöst, dass der jeweiligen Schneiddüse ein Gas unter definiertem Druck von einer Druckquelle zugeführt wird, der zeitliche Druckaufbau erfasst und mit für Schneiddüsen-Typen spezifischen Druckaufbau-Kenndaten verglichen wird, um bei Übereinstimmung mit den Kenndaten die in den Schneidbrenner eingebaute Schneiddüse einem erkannten Schneiddüsen-Typ zuzuordnen. Bei diesen Verfahren wird das Prinzip ausgenutzt, dass sich für unterschiedliche Schneiddüsen, die sich in dem Durchmesser ihres Gaskanals unterscheiden, bei gleichem Druck eines hindurchgeleiteten Gases eine unterschiedliche Durchflussmenge ergibt. Hieraus werden Schneiddüsen-Kenndaten abgeleitet, die dann mit einer zu beurteilenden Schneiddüse verglichen werden, um dann die Druckänderungswerte einer im Schneidbrenner eingebauten Schneiddüse mit diesen Kenndaten zu vergleichen und aus einer Übereinstimmung mit entsprechenden abgelegten Kenndaten auf die im Schneidbrenner eingebaute Schneiddüse zu schließen. Dabei können die Druckänderungsdaten, wie vorstehend angegeben, zum einen daraus abgeleitet werden, dass zunächst ein Druck aufgebaut wird, dann die Gaszufuhr unterbrochen wird, um den Druckabfall zu erfassen. Andererseits können sich diese Druckänderungswerte auch dadurch ergeben, dass zu Beginn der Gaszufuhr ein zeitlicher Druckaufbau, der durch die spezifische, eingesetzte Schneiddüse bestimmt wird, zu ermitteln. Vorrichtungsgemäß wird für eine solche automatische Düsenerkennung Gas, vorzugsweise Schneidsauerstoff, der in einem Schneidbrenner grundsätzlich zur Verfügung steht, über ein Magnetventil zugeführt. Die Druckzufuhr wird dann abgeschaltet, indem das Magnetventil wieder geschlossen wird, und mit einem Drucksensor wird der zeitliche Verlauf des Druckabbaus in der Gaszuführung des Brenners beobachtet. Da jeder Gaskanalquerschnitt einer Schneiddüse eine unterschiedliche Durchflussmenge und damit messbare Zeitkonstante beim Druckabbau oder Druckaufbau hat, können daraus typische Werte und Kenndaten für die jeweilige eingebaute Düse abgeleitet werden. Es ergibt sich somit eine schnelle und einfache Verfahrensweise, den im Schneidbrenner eingebauten Düsentyp zu erkennen. Eine solche Erkennung kann automatisch vor jedem Schneidvorgang erfolgen, so dass nur dann, wenn ein vorgegebener Düsentyp, der für den jeweiligen Schneidvorgang geeignet ist, in dem Schneidbrenner eingebaut ist, der Schneidbetrieb freigegeben wird.

Wie bereits vorstehend erwähnt, sollte, für einen einfachen Aufbau, ein Gas zum ermitteln der Düsenkenndaten eingesetzt werden, das ohnehin zum Schneiden benutzt wird, wobei bevorzugt Sauerstoff verwendet werden sollte.

In einer Weiterbildung des Verfahrens kann der Druck über einen Drucksensor erfasst werden und die zeitliche Änderung des Druckes einer zentralen Auswerteeinheit zugeführt werden, die Druckänderungs-Kenndaten erstellt und die Druckänderungs-Kenndaten mit in einem Speicher abgelegten Kenndaten vergleicht, wobei unter Auffinden einer Übereinstimmung mit abgelegten Kenndaten der zu den abgelegten Kenndaten registrierte Schneiddüsen-Typ angezeigt wird.

Bevorzugt wird als Drucksensor, über den der Druck erfasst wird, ein solcher eingesetzt, der bereits Teil einer für den Schneidbetrieb eingesetzten Gasmengenregelung ist, so dass dann praktisch keine zusätzlichen Bauelemente für eine solche automatische Schneidbrenner-Schneiddüsenerkennung erforderlich sind. Über eine solche zentrale Auswertungseinheit der für die eingebaute Schneiddüse spezifischen Kenndaten kann der Schneidbetrieb unmittelbar beeinflußt werden, das heißt der Schneidbetrieb kann nur bei der korrekt eingebauten Schneiddüse für das zu schneidende Material freigegeben werden oder aber dem Bediener der Schneidanlage kann signalisiert werden, dass die Schneiddüse zu wechseln ist.

Somit bietet das Verfahren eine hohe Sicherheit dahingehend, dass jeweils korrekte Schneiddüsen für den Schneidvorgang verwendet werden, ohne dass ein solcher Erkennungsvorgang für die eingebaute Schneiddüse eine wesentliche Zeit beansprucht und dadurch den zeitlichen Ablauf der Materialbearbeitung beeinflusst.

Das Verfahren ist bei den unterschiedlichen Schneiddüsen bzw. unterschiedlichen Schneidanlagen einsetzbar, das bedeutet sowohl bei Autogen-Schweissbrennern als auch bei Plasmabrennern, oder anderen Schneidbrennern, die mit einem entsprechenden Gas versorgt werden. Weiterhin ist zu erwähnen, dass solche Schneiddüsen mehrere Gaskanäle aufweisen bzw. aufweisen können, so dass das Verfahrensprinzip nicht nur für ein Gas und den entsprechenden Gaskanalquerschnitt eingesetzt werden kann, sondern auch für Messungen der unterschiedlichen Gaskanäle, um weitere Kenndaten zu ermitteln. Meistens ist es allerdings ausreichend, einen der Gaskanalquerschnitte zu erfassen, um daraus die spezifischen Schneiddüsen-Kenndaten festzustellen.

Weitere Einzelheiten und Merkmale der Erfindung ergeben sich aus der nachfolgenden Beschreibung von Ausführungsbeispielen anhand der Zeichnung. In der Zeichnung zeigt
- **Figur 1**: einen schematischen Aufbau eines Schneidbrenners in Form eines Autogenschneidbrenners mit einer zentralen Auswerteeinheit,
- **Figur 2**: eine Schnittdarstellung durch den Autogenbrennerschneidkopf sowie zwei perspektivische Ansichten zum einen der entsprechenden Düsenkappe und der dieser Düsenkappe zugeordneten Schneiddüse, und
- **Figur 3**: einen schematischen Aufbau entsprechend der Figur 1, allerdings mit einer zentralen Gasmengenregelung, mit der die zentrale Auswerteeinheit verbunden ist.

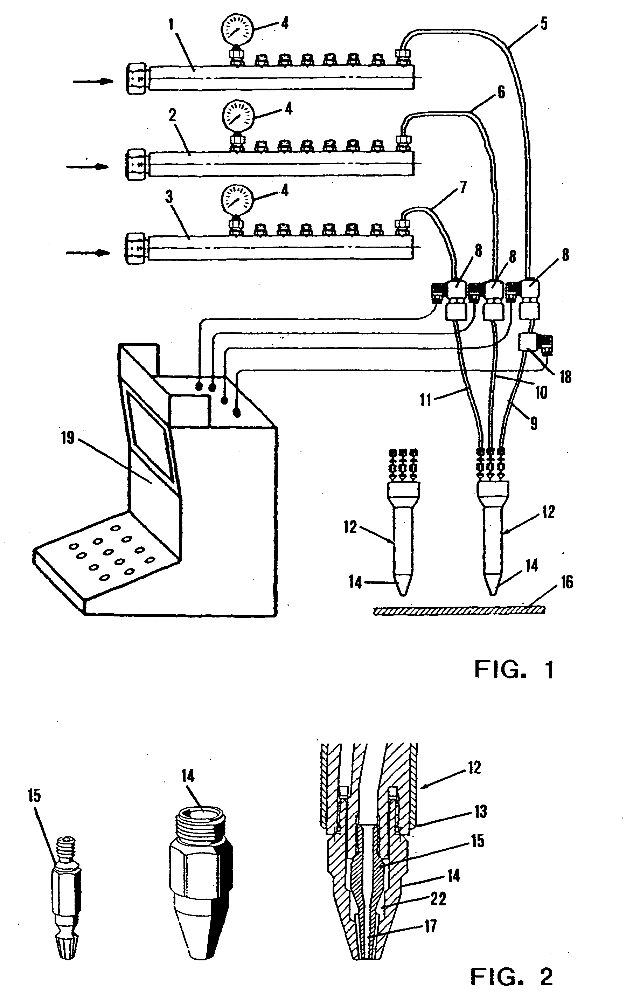

**Figur 1** zeigt einen schematischen Aufbau einer Autogenschneidbrenner-Anlage mit drei Gasverteilern 1, 2, 3 für Schneidsauerstoff, Heizsauerstoff und Brenngas. Jedem dieser Gasverteiler 1, 2, 3 ist jeweils ein Druckmanometer 4 zugeordnet. Verbunden mit den Gasverteilern 1, 2, 3 sind Gasleitungen 5, 6, 7, die das jeweilige Gas über jeweils ein Magnetventil, jeweils mit dem Bezugszeichen 8 bezeichnet, und Gaszufuhrleitungen 9, 10 und 11 dem Autogenschneidbrenner 12 zuführen. Das Schneidende des Autogenschneidbrenners 12 ist in einer Schnittdarstellung entlang der Düsenachse in der linken Zeichnung der Figur 2 dargestellt. Wie zu erkennen ist, ist in ein Halteteil 13 eine Düsenkappe 14 eingeschraubt, die im Inneren eine Schneiddüse 15 aufnimmt. Diese Düsenkappe 14 ist zur Veranschaulichung in einer perspektivischen Ansicht in der mittleren Darstellung der **Figur 2** gezeigt, während die Schneiddüse 15 in einer perspektivischen Ansicht in der linken Darstellung in Figur 2 zu sehen ist. Für zu schneidendes Material 16, das in der Figur 1 angedeutet ist, müssen spezifische Schneiddüsen 15 verwendet werden, das heißt Schneiddüsen, die einen speziellen Düsendurchmesser haben müssen, das bedeutet einen speziellen Durchmesser der Düsenbohrung 17 (siehe Figur 2). Die Größen der Düsen sind üblicherweise auf der Außenfläche angegeben, so dass diese Düsenkenndaten nur dann sichtbar sind, wenn die Düse 15 aus dem Autogenschneidbrenner 12 ausgebaut ist. Im eingebauten Zustand wird die Schneiddüse 15 vollständig durch die Düsenkappe 14 verdeckt (siehe rechte Darstellung der Figur 2), so dass nicht unmittelbar erkennbar ist, welcher Typ einer Schneiddüse 15 in den Autogenschneidbrenner 12 eingebaut ist. Zum Überprüfen der Schneiddüse 15 vor einem Schneidvorgang ist es daher erforderlich, die Düsenkappe 14 von dem Halteteil 13 abzuschrauben, um dann die Schneiddüse 15 zu entnehmen, so dass die Düsendaten auf der Außenfläche der Schneiddüse 15 lesbar sind, was ein zeitaufwendiger Vorgang ist.

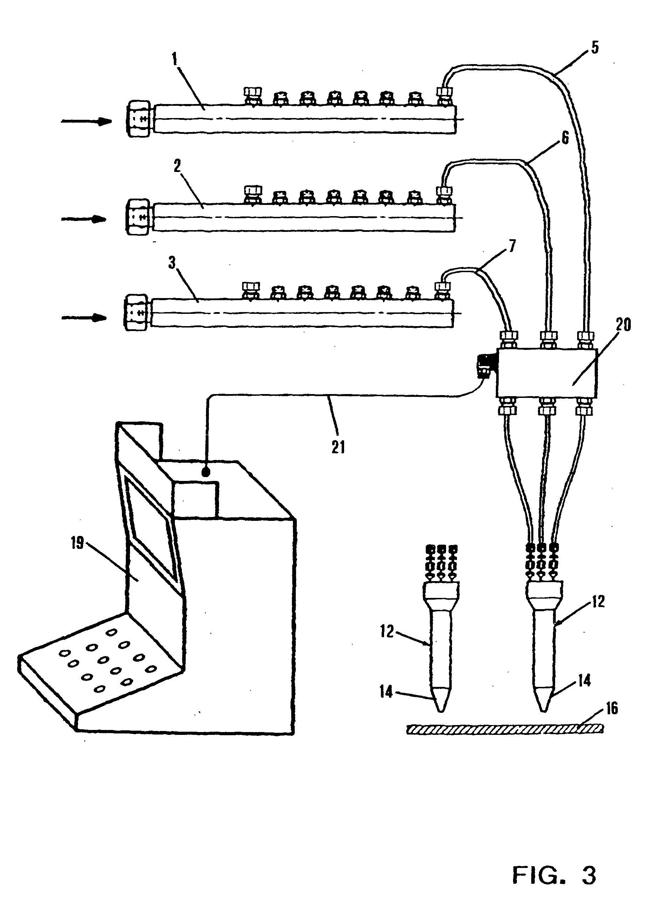

Mit den Anordnungen, wie sie in der Figur 1 und auch in der **Figur 3** zu sehen sind, ist eine automatische Erkennung der in dem Autogenschneidbrenner 12 eingebauten Schneiddüse 15 möglich. Für eine solche automatische Erkennung wird über den Gasverteiler 1, die Gasleitung 5 und durch Öffnen des Magnetventils 8, das der Gasleitung 5 zugeordnet ist, der Schneiddüse 15 über die Gaszuführleitung 9 Schneidsauerstoff zugeführt. Die Druckzufuhr wird dann wieder über das Magnetventil 8 unterbrochen und es wird über einen in die Gaszuführleitung 9 integrierten Drucksensor 18 der zeitliche Verlauf des Druckaufbaus in dieser Schneidsauerstoffzuführung erfasst. Die Druckdaten des Sensors werden einer zentralen Auswerteeinheit zugeführt, die in der Anordnung, wie sie in Figur 1 gezeigt ist, Teil einer Ablaufsteuerung 19 ist. In dieser Druckablaufsteuerung werden anhand des zeitlichen Verlaufs des gemessenen Druckabbaus Schneiddüsen-Kenndaten erstellt. Diese Kenndaten sind von dem jeweiligen Düsenöffnungsdurchmesser 17 der Schneiddüse 15 abhängig. Die für die momentan in den Autogenschneidbrenner 12 eingebaute Schneiddüse 15 ermittelten Kenndaten werden mit in der Ablaufsteuerung 19 abgelegten, vorab ermittelten Schneiddüsen-Kenndaten verglichen, so dass bei Übereinstimmung mit vorhandenen Schneiddüsen-Kenndaten in der Ablaufsteuerung 19 der Typ der momentan in den Autogenschneidbrenner 12 eingebauten Schneiddüse 15 ermittelt werden kann.

In die Ablaufsteuerung 19 können zuvor die Daten des zu schneidenden Materials 16 eingegeben worden sein mit Angaben darüber, welche spezifischen Schneiddüsen 15 zum Schneiden dieses Materials geeignet ist. Falls sich eine Übereinstimmung des Düsentyps, der momentan in dem Autogenschneidbrenner 12 eingebaut ist, mit dem erforderlichen Schneiddüsen-Typ zum Schneiden des Materials 16 ergibt, kann der Schneidvorgang freigegeben werden. Falls der Düsentyp nicht geeignet ist, wird über den Bildschirm oder ein anderes Hinweissignal der Ablaufsteuerung 19 dem Bediener der Maschine eine entsprechende Information angezeigt, so dass die Schneiddüse daraufhin ausgetauscht und auf den geeigneten Typ gewechselt werden kann.

Das vorstehend angegebene Prinzip kann auch für den weiteren Düsenkanal, der in Figur 2 mit dem Bezugszeichen 22 bezeichnet ist, angewandt werden.

Figur 3 zeigt einen schematischen Aufbau einer Schneidanlage, der mit dem Aufbau der Figur 1 vergleichbar; insofern sind für die entsprechenden Bauteile die selben Bezugszeichen verwendet.

Im Gegensatz zu der Anordnung nach der Figur 2 ist bei der Anordnung nach Figur 3 anstelle der einzelnen Magnetventile 8 und des speziellen Drucksensors 18 in der Gasleitung 5 für die Schneidsauerstoffzufuhr eine Gasmengenregeleinheit 20 eingesetzt. Diese Gasmengenregeleinheit ist über eine Regel- und Steuerleitung 21 mit der Ablaufsteuerung 19 verbunden. Wenn eine solche Ablaufsteuerung 19 bereits mit allen Einrichtungen ausgestattet ist, um die Gasmengen, die über die jeweiligen Gasverteiler 1, 2 und 3 dem Autogenschneidbrenner 12 zugeführt werden, zu regeln, das heißt auch im Online-Betrieb zu regeln, können mit einem solchen Aufbau über die Gasmengenregeleinheit 20 die Druckabfall-Kenndaten für die Schneiddüse 15 durch Zufuhr von Heizsauerstoff über die Gasleitung 6 oder auch durch die Zufuhr von Brennergas über die Gasleitung 7 ermittelt werden, wobei in der Gasmengenregeleinheit 20 Magnetventile und Sensoren in jeder der Leitungen eingesetzt sind.

Es ist darauf hinzuweisen, dass die Erstellung der Schneiddüsen-Kenndaten nicht unmittelbar über die Zufuhr eines Gases, das ohnehin zum Schneiden verwendet wird, erfolgen muss, sondern dass, basierend auf den gezeigten Anordnungen und Prinzipien, ein beliebiges Gas einsetzbar ist.

Das vorstehend beschriebene Prinzip kann nicht nur bei Autogenschneidbrennern eingesetzt werden, sondern auch in Verbindung mit Plasma- oder Laserschneiddüsen.

## Patentansprüche

1. Verfahren für die automatische Erkennung von unterschiedlichen Schneiddüsen, die jeweils zum Schneiden von Materialien unterschiedlicher Materialstärken oder Materialarten geeignet sind, in einem im Schneidbrenner eingebauten Zustand, **dadurch gekennzeichnet, dass** der jeweiligen Schneiddüse ein Gas unter definiertem Druck von einer Druckquelle zugeführt wird, die Gaszufuhr dann unterbrochen wird, der zeitliche Druckabfall erfasst und mit für Schneiddüsen-Typen spezifischen Druckabfall-Kenndaten verglichen wird, um bei Übereinstimmung mit den Kenndaten die in den Schneidbrenner eingebaute Schneiddüse einem erkannten Schneiddüsen-Typ zuzuordnen.

2. Verfahren für die automatische Erkennung von unterschiedlichen Schneiddüsen, die jeweils zum Schneiden von Materialien unterschiedlicher Materialstärken oder Materialarten geeignet sind, in einem im Schneidbrenner eingebauten Zustand, **dadurch gekennzeichnet, dass** der jeweiligen Schneiddüse ein Gas unter definiertem Druck von einer Druckquelle zugeführt wird, der zeitliche Druckaufbau erfasst und mit für Schneiddüsen-Typen spezifischen Druckaufbau-Kenndaten verglichen wird, um bei Übereinstimmung mit den Kenndaten die in den Schneidbrenner eingebaute Schneiddüse einem erkannten Schneiddüsen-Typ zuzuordnen.

3. Verfahren nach Anspruch 1 oder 2, **dadurch gekennzeichnet, dass** als Gas ein zum Schneiden genutztes Gas zugeführt wird.

4. Verfahren nach Anspruch 3, **dadurch gekennzeichnet, dass** Sauerstoff zugeführt wird.

5. Verfahren nach Anspruch 1 oder 2, **dadurch gekennzeichnet, dass** der Druck über einen Drucksensor erfasst wird und die zeitliche Änderung des Drucks einer zentralen Auswerteeinheit zugeführt wird, die daraus Druckänderungs-Kenndaten erstellt und die Druckänderungs-Kenndaten mit in einem Speicher abgelegten Kenndaten vergleicht, wobei unter Auffinden einer Übereinstimmung mit abgelegten Kenndaten der zu den abgelegten Kenndaten registrierte Schneiddüsen-Typ angezeigt wird.

6. Verfahren nach Anspruch 5, **dadurch gekennzeichnet, dass** der Drucksensor Teil einer für den Schneidbetrieb eingesetzten Gasmengenregelung ist.

7. Verfahren nach Anspruch 6, **dadurch gekennzeichnet, dass** die ermittelte, eingebaute Schneiddüse mit Materialkenndaten des zu schneidenden Materials verglichen wird und bei nicht geeigneter Schneiddüse ein Warnsignal abgegeben wird.

8. Verfahren nach Anspruch 6, **dadurch gekennzeichnet, dass** die ermittelte, eingebaute Schneiddüse mit Materialkenndaten des zu schneidenden Materials verglichen wird und bei nicht geeigneter Schneiddüse ein Warnsignal abgegeben wird und der Schneidbetrieb gesperrt wird.

9. Verfahren nach Anspruch 6, **dadurch gekennzeichnet, dass** vor Schneidbeginn die eingebaute Schneiddüse ermittelt wird und mit Materialkenndaten des zu schneidenden Materials verglichen wird und bei nicht geeigneter Schneiddüse der Schneidbetrieb nicht freigegeben wird.

## Claims

1. A method for automatically identifying different cutting nozzles, each being suited for cutting materials of different material thicknesses or types, in a state installed in the cutting torch, **characterized in that** a gas is supplied from a pressure source under a defined pressure to the respective cutting nozzle, the gas supply is then interrupted, the pressure drop over time is sensed and compared with pressure drop characteristics specific for cutting nozzles types to assign the cutting nozzle installed in the cutting torch to an identified cutting nozzle type in case of correspondence with the characteristics.

2. A method for automatically identifying different cutting nozzles, each being suited for cutting materials of different material thicknesses or types, in a state installed in the cutting torch, **characterized in that** a gas is supplied from a pressure source under a defined pressure to the respective cutting nozzle, the pressure build-up over time is sensed and compared with pressure build-up characteristics specific for cutting nozzles types to assign the cutting nozzle installed in the cutting torch to an identified cutting nozzle type in case of correspondence with the characteristics.

3. A method according to claim 1 or 2, **characterized in that** a gas used for cutting is supplied as the gas.

4. A method according to claim 3, **characterized in that** oxygen is supplied.

5. A method according to claim 1 or 2, **characterized in that** the pressure is sensed via a pressure sensor and the change in pressure over time is fed to a central evaluation unit which prepares pressure change characteristics on the basis thereof and compares the pressure change characteristics with characteristics stored in a memory, the cutting nozzle type registered with respect to the stored characteristics being indicated upon detection of correspondence with stored characteristics.

6. A method according to claim 5, **characterized in that** the pressure sensor is part of a gas quantity controller used for the cutting operation.

7. A method according to claim 6, **characterized in that** the installed cutting nozzle as determined is compared with material characteristics of the material to be cut, and an alarm signal is output in case of an inappropriate cutting nozzle.

8. A method according to claim 6, **characterized in that** the installed cutting nozzle as determined is compared with material characteristics of the material to be cut, and an alarm signal is output in case of an inappropriate cutting nozzle and the cutting operation is disabled.

9. A method according to claim 6, **characterized in that** prior to the cutting operation the installed cutting nozzle is determined and compared with material characteristics of the material to be cut, and the cutting operation is not enabled in case of an inappropriate1 cutting nozzle.

## Revendications

1. Procédé pour la détection automatique de différentes buses de coupe qui sont appropriées respectivement pour la découpe de matériaux d'épaisseurs ou de types différents, dans un état monté dans le chalumeau, **caractérisé en ce que** il est amené à la buse de coupe respective un gaz sous une pression définie provenant d'une source de pression, **en ce que** l'amenée de gaz est interrompue, la chute temporelle de pression est relevée et est comparée à des données caractéristiques de chute de pression spécifiques aux types de buses de coupe pour associer en cas de concordance des données caractéristiques les buses de coupe montées dans le chalumeau à un type de buse de coupe détecté.

2. Procédé pour la détection automatique de différentes buses de coupe qui sont appropriées respectivement pour la découpe de matériaux d'épaisseurs ou de types différents, dans un état monté dans le chalumeau, **caractérisé en ce que** il est amené à la buse de coupe respective un gaz sous une pression définie provenant d'une source de pression, **en ce que** l'amenée de gaz est interrompue, la montée temporelle de pression est relevée et est comparée à des données caractéristiques de montée de pression spécifiques aux types de buses de coupe pour associer en cas de concordance des données caractéristiques les buses de coupe montées dans le chalumeau à un type de buse de coupe détecté.

3. Procédé selon la revendication 1 ou 2, **caractérisé en ce qu'**en tant que gaz, on utilise un gaz utilisé pour la découpe.

4. Procédé selon la revendication 1 ou 2, **caractérisé en ce que** l'oxygène est amené.

5. Procédé selon la revendication 1 ou 2, **caractérisé en ce que** la pression est relevée par un capteur de pression et la modification temporelle de la pression est envoyée à une unité d'analyse centrale qui en tire des données caractéristiques de modifications de pression et qui compare les données caractéristiques de modification de pression aux données caractéristiques déposées dans une mémoire, en cas de concordance avec les données caractéristiques déposées, le type des buses de coupe enregistrées par rapport aux données caractéristiques déposées est affiché.

6. Procédé selon la revendication 5, **caractérisé en ce que** le capteur de pression fait partie d'une régulation de quantité de gaz utilisé pour le fonctionnement de coupe.

7. Procédé selon la revendication 5, **caractérisé en ce que** la buse de coupe montée déterminée est comparée aux données caractéristiques du matériau à couper et si la buse de coupe ne convient pas, un signal d'alerte est délivré.

8. Procédé selon la revendication 6, **caractérisé en ce que** la buse de coupe montée déterminée est comparée aux données caractéristiques du matériau à couper et si la buse de coupe ne convient pas, un signal d'alerte est délivré et le fonctionnement de coupe est bloqué.

9. Procédé selon la revendication 6, **caractérisé en ce qu'**avant le début de la coupe, la buse de coupe est déterminée et est comparée aux données caractéristiques du matériau à couper et en cas de buses de coupe non appropriées, le fonctionnement de coupe n'est pas débloqué.
